Europäisches Patentamt

(19) European Patent Office

Office européen des brevets

(11) Numéro de publication : **0 130 872**
**B1**

(12) # FASCICULE DE BREVET EUROPÉEN

(45) Date de publication du fascicule du brevet :
**02.12.87**

(51) Int. Cl.⁴ : **C 08 F   8/28**

(21) Numéro de dépôt : **84401215.3**

(22) Date de dépôt : **14.06.84**

(54) Procédé de fabrication de polyvynilbutyral et produits obtenus.

(30) Priorité : **14.06.83 FR 8309840**

(43) Date de publication de la demande :
**09.01.85 Bulletin 85/02**

(45) Mention de la délivrance du brevet :
**02.12.87 Bulletin 87/49**

(84) Etats contractants désignés :
**AT BE CH DE FR GB IT LI LU NL SE**

(56) Documents cités :
**DE-C-   855 002**
**FR-A- 2 401 941**
**FR-E-    61 290**

(73) Titulaire : **SAINT-GOBAIN VITRAGE**
**Les Miroirs 18, avenue d'Alsace**
**F-92400 Courbevoie (FR)**

(72) Inventeur : **Degeilh, Robert**
**29 Route de Versailles**
**F-78560 Le Port Marly (FR)**

(74) Mandataire : **Muller, René et al**
**SAINT-GOBAIN RECHERCHE 39, quai Lucien Lefranc**
**F-93304 Aubervilliers (FR)**

EP 0 130 872 B1

## Description

L'invention concerne la fabrication d'un polyvinylbutyral amélioré, utilisé notamment en tant qu'intercalaire pour des vitrages feuilletés.

On connaît différentes méthodes de fabrication du polyvinylbutyral. Par exemple dans la publication de brevet français 2 401 941, on décrit un procédé de fabrication du polyvinylbutyral par réaction d'alcool polyvinylique en solution aqueuse et d'aldéhyde butyrique comprenant la suite d'opérations suivantes, on prend une solution aqueuse comprenant entre 8 et 15 % en poids d'alcool polyvinylique, on y incorpore un catalyseur acide et un émulsifiant, on introduit dans le mélange obtenu maintenu entre 5 et 12 °C et sous agitation de l'aldéhyde butyrique en quantité suffisante pour réagir avec 75 % à 88 % de l'alcool polyvinylique du mélange, l'introduction de l'aldéhyde butyrique s'effectuant progressivement pendant une durée telle que le polyvinylbutyral précipite entre 10 et 90 minutes après le début de cette introduction, on maintient le mélange sous agitation pendant une durée supérieure à 30 minutes à une température de 8 à 15 °C, on élève ensuite la température du mélange jusqu'à une valeur maintenue entre 60 et 80 °C en un laps de temps compris entre une heure et demie et 4 heures, lorsque ladite valeur de température est atteinte, on incorpore une base dans le mélange jusqu'à obtention d'un pH compris entre 9 et 11, on maintient ensuite la température à ladite valeur pendant une durée supérieure à un quart d'heure, on sépare le polyvinylbutyral précipité du mélange, et on le lave avec de l'eau.

Le polyvinylbutyral (PVB) obtenu par ce procédé présente des propriétés qui le rendent apte après plastification à être utilisé sous forme de feuilles intercalaires dans les vitrages feuilletés. Ces propriétés de la feuille intercalaire ou du vitrage l'utilisant sont notamment le fluage en compression de la feuille de PVB, la résistance aux chocs du vitrage feuilleté comprenant une telle feuille de PVB (test de la chute de bille), la force d'adhérence du PVB aux feuilles de verre (Pummel test), la transparence du vitrage feuilleté (détermination du trouble ou turbidité du vitrage).

Mais dans le procédé, de même que dans d'autres procédés de fabrication du PVB, on utilise un émulsifiant qui est du dodécylbenzène sulfonate ou du laurylsulfate de sodium. L'émulsifiant a notamment pour rôle d'éviter la formation de billes ou d'agglomérats de PVB, néfastes à l'obtention d'un produit de bonne qualité optique. Indispensable au cours de la synthèse du PVB, l'émulsifiant doit cependant être éliminé au moins en grande partie par lavage en fin de réaction car il empêche l'adhésion au verre. Cette élimination ne peut s'effectuer correctement en milieu acide, c'est pourquoi on incorpore dans ce milieu réactionnel une base telle la soude, dans le but de neutraliser l'acide du catalyseur jusqu'à obtention d'un pH compris entre 9 et 11. Un des inconvénients de cette neutralisation est qu'au cours de cette phase il se forme des produits de réaction de condensation de l'aldéhyde butyrique sur lui-même, et notamment de l'éthyl-2-hexenal d'odeur désagréable.

Un des objets de l'invention est l'utilisation d'un émulsifiant qui de façon inattendue s'élimine facilement au lavage et ce en milieu partiellement neutralisé seulement.

Un autre objet de l'invention est d'éviter la formation d'éthyl 2-hexenal d'odeur désagréable.

Conformément à l'invention, dans un procédé de fabrication de polyvinylbutyral apte à être utilisé sous forme d'intercalaire dans un vitrage feuilleté, on utilise en tant qu'émulsifiant le dioctylsulfosuccinate de sodium (DOS).

Le procédé de fabrication préféré est celui qui regroupe les opérations décrites dans la publication de brevet français 2 401 941 déjà cité mais qui utilise le dioctylsulfosuccinate de sodium (DOS) en tant qu'émulsifiant et dans lequel on limite la phase de neutralisation du mélange réactionnel pour atteindre un pH de l'ordre de 5 seulement.

Un autre avantage du procédé selon l'invention est que l'émulsifiant utilisé peut être éliminé par lavage avec de l'eau ayant la température ambiante, c'est-à-dire une température de l'ordre de 15 à 20 °C.

Un autre avantage du procédé selon l'invention est qu'il utilise à qualité de PVB égale, une quantité plus faible d'émulsifiant, la quantité de dioctylsulfosuccinate de sodium représentant de 0,10 à 0,30 % et généralement de l'ordre de 0,15 % du poids de l'alcool polyvinylique.

Un autre avantage du procédé selon l'invention est qu'il permet de réduire la durée de mûrissement du PVB après neutralisation, cette durée passant de 1 heure environ à une valeur de 5 à 10 minutes, et par conséquent de réduire d'autant la durée totale de fabrication du PVB.

En vue de son application en tant qu'intercalaire dans un vitrage feuilleté, le PVB est plastifié de façon connue à l'aide des plastifiants usuels par exemple ceux décrits dans les publications de brevets européens 0011577 ou 0047215.

D'autres caractéristiques et avantages de l'invention apparaîtront dans la description suivante d'exemples de fabrication de PVB.

Les méthodes d'essais utilisées pour mettre en évidence les avantages de la présente invention sont décrites ci-après :

### Test de fluage en compression

On utilise pour ce test une presse à plateaux chauffants.

Un échantillon de feuille de PVB, ayant une épaisseur de 0,76 mm (+ 0,01 mm) est découpé à

# 0 130 872

l'emporte-pièce sous forme d'un disque de 26 mm de diamètre. Le disque est placé entre deux lames de verre de 60 × 60 mm. L'ensemble est mis entre les plateaux, maintenus à 135 °C, de la presse chauffante. Après 5 min de préchauffage sans appliquer de pression, le composite est soumis pendant 5 min à une pression de $10^6$ Pa (10 bars). Si D représente (à 0,25 mm près) le diamètre du disque de PVB pressé, le fluage est donné par la formule :

$$F = \frac{D - 26}{26} \times 100$$

On procède en général à deux mesures par échantillon de feuille.

On considère que, pour l'application du PVB à la réalisation de vitrage feuilleté, le fluage en compression doit être au moins égal à 60 %.

### Pummel test (adhésivité à des feuilles de verre)

Les échantillons de vitrage feuilleté utilisés dans ce test et les suivants sont préparés comme suit. Une feuille de PVB de 0,76 mm d'épaisseur est préalablement conditionnée en humidité, placée entre deux feuilles de verre de 30,5 × 30,5 cm et de 3 mm d'épaisseur, le verre feuilleté étant alors comprimé sous une pression $10^6$ Pa (10 bars) à 138 °C pendant 20 minutes. Sur un de ces échantillons, on prélève, pour le Pummel test, une fraction de celui-ci de 150 à 300 mm. Celui-ci est conditionné pendant 8 heures à — 18 °C. Cet échantillon est ensuite posé sur un support incliné à 45° et frappé avec un marteau à tête plate de 0,450 kg jusqu'à ce que le verre soit pulvérisé. La surface d'essais est d'environ 100 × 150 mm et les coups de marteau sont répartis sur toute la surface. La quantité de verre restant collé à la feuille de polyvinylbutyral est comparée à une échelle de standards « Pummel » notés de 0 à 10.

L'essai s'effectue sur les deux faces du verre feuilleté et le résultat s'exprime par conséquent par deux valeurs de l'échelle Pummel, déterminées de la manière suivante :

| % de surface de la feuille de PVB dont le verre s'est décollé lors de la casse | Valeurs Pummel |
|---|---|
| 100 | 0 |
| 95 | 1 |
| 90 | 2 |
| 85 | 3 |
| 60 | 4 |
| 40 | 5 |
| 20 | 6 |
| 10 | 7 |
| 5 | 8 |
| 2 | 9 |
| 0 | 10 |

On considère qu'un verre feuilleté ainsi testé est acceptable si les deux valeurs Pummel obtenues sont supérieures à 5.

### Test de la chute de bille (résistance au choc)

Cet essai est effectué avec une bille d'acier d'un poids de 2,270 kg, que l'on fait tomber sur la partie centrale d'un échantillon plan du verre feuilleté, reposant en position horizontale sur un cadre en bois. L'échantillon de verre feuilleté mesure 30,5 × 30,5 cm et les feuilles de verre ont 3 mm d'épaisseur.

Les échantillons sont à une température de 21 °C (+ 2 °C) et l'essai est conduit à des hauteurs croissantes de chute de la bille. On détermine la hauteur approximative, exprimée en mètres, pour laquelle plus de 90 % des échantillons testés résistent au passage de la bille à travers le feuilleté.

Ce test est considéré comme positif lorsque cette hauteur approximative est supérieure ou égale à environ 5, 18 mètres (17 pieds).

### Test de détermination de la turbidité

Le « trouble » (ou « turbidité ») d'une feuille transparente est défini comme étant le pourcentage du flux lumineux la traversant qui est dévié d'un angle supérieur à 2,5 degrés.

La mesure de la turbidité s'effectue conformément à la norme NF 54-111 (qui concorde largement avec la méthode A de la norme ASTM D 1003-61).

Pour les applications du PVB à la réalisation de vitrages feuilletés, on considère comme acceptables des valeurs de la turbidité inférieures ou égales à 0,3 %.

3

**0 130 872**

Test de résistance à l'humidité

Des échantillons de vitrage feuilleté sont préparés en interposant un intercalaire plastifié de 0,76 mm entre deux plaques de verre de 30,5 × 30,5 cm et de 3 mm d'épaisseur. Ces échantillons sont placés dans de l'eau bouillante pendant deux heures et examinés ensuite pour déceler une éventuelle formation de bulles ou d'une bande blanche translucide à la périphérie des échantillons. L'absence de formation de bulles ou de bandes blanches translucides indique que le feuilleté a subi avec succès le test de résistance à l'humidité.

Exemple 1

Cet exemple qui utilise le procédé décrit dans la publication de brevet français 2 401 941 est un exemple témoin.

Dans une solution de 30 kg d'alcool polyvinylique dans 300 l d'eau à une température de 10 °C, on mélange 67,5 g de dodécylbenzène sulfonate de sodium et 2,65 kg d'acide chlorhydrique de densité 1,18. Le mélange étant maintenu à une température de 10 °C, on y introduit progressivement et régulièrement, en 30 minutes, 17,1 kg d'aldéhydebutyrique. On constate une élévation de température de quelques degrés. La solution devient blanchâtre et sa viscosité augmente. Brusquement, 30 minutes environ après le début de l'introduction de l'aldéhydebutyrique, on constate l'apparition d'un précipité et une diminution de la viscosité. Le mélange est alors laissé pendant 30 minutes à une température de 13 °C. On amène ensuite progressivement la température à 70 °C, la durée de montée en température étant de 90 minutes. Le mélange est alors neutralisé par 1,35 kg de soude ce qui correspond à l'obtention d'un pH de 10. On le maintient à 70 °C durant 60 minutes. Il est ensuite refroidi et lavé plusieurs fois avec de l'eau à 70 °C, essoré et séché.

La résine est ensuite plastifiée avec par exemple de l'adipate de benzyle et d'octyle selon les méthodes bien connues de l'homme de métier.

Les vitrages feuilletés utilisant une feuille de cette résine plastifiée présentent de bonnes propriétés optiques et mécaniques ainsi qu'une bonne résistance à l'humidité.

Les essais effectués sur des feuilletés dans les conditions décrites précédemment donnent les résultats suivants :

| | |
|---|---|
| Taux d'hydroxyle | 17,5 % |
| Taux d'éthyl 2-hexenal | 1,06 % |
| Fluage | 63 % |
| Chute de billes | 5,8 mètres |
| Pummel | 5 + 5 |
| Turbidité | 0,29 |

avec des verres mal lavés, le Pummel n'est que 1 + 1 ce qui indique une adhésion insuffisante.

Exemple 2

On opère de la même façon que dans l'exemple 1 sauf que la neutralisation est effectuée jusqu'à pH 5 seulement. Les résultats sont les suivants :

| | |
|---|---|
| Taux d'hydroxyle | 17,5 % |
| Taux d'éthyl 2-hexenal | 0,06 % |
| Fluage | 62 % |
| Chute de bille | 6,4 mètres |
| Pummel | 1 + 2 |
| Turbidité | 0,30 |

avec des verres mal lavés le Pummel est nul.

Les valeurs de Pummel plus basses montrent qu'il reste de l'émulsifiant en quantité importante dans la feuille intercalaire. L'émulsifiant a été mal éliminé par lavage.

Les exemples suivants sont conformes au procédé de l'invention du fait qu'ils utilisent du dioctylsulfosuccinate de sodium DOS en tant qu'émulsifiant.

Exemple 3

On opère de la même façon que dans l'exemple 1 sauf qu'on utilise 100 g de DOS comme émulsifiant et que la résine est lavée à l'eau à la température ambiante.

| | |
|---|---|
| Taux d'hydroxyle | 19,3 % |
| Taux d'éthyl 2-hexenal | 0,50 % |

4

| Fluage | 63 % |
| Chute de billes | 5,8 mètres |
| Pummel | 6 + 7 |
| Turbidité | 0,28 |

avec des verres mal lavés le Pummel est 2 + 2.

## Exemple 4

On opère de la même façon que dans l'exemple 3 sauf que le produit est lavé avec de l'eau à 70 °C.

| Taux d'hydroxyle | 19,3 % |
| Taux d'éthyl 2-hexenal | 0,80 % |
| Fluage | 61 % |
| Chute de billes | 5,8 mètres |
| Pummel | 5 + 6 |
| Turbidité | 0,27 |

avec des verres mal lavés le Pummel est de 2 + 3.

Cet exemple montre qu'il n'est pas nécessaire de laver la résine avec de l'eau chaude.

## Exemple 5

On opère de la même façon que dans l'exemple 3 sauf qu'on utilise 50 g de DOS et que la neutralisation est limitée à un pH de 5. On obtient les valeurs suivantes :

| Taux d'hydroxyle | 19,3 % |
| Taux d'éthyl 2-hexenal | 0,04 % |
| Fluage | 62 % |
| Chute de billes | 5,8 mètres |
| Pummel | 8 + 9 |
| Turbidité | 0,27 |

avec des verres mal lavés le Pummel est de 5 + 5.

Cet exemple montre par rapport à l'exemple 3 qu'on peut avantageusement utilisé moins d'émulsifiant. On conserve des valeurs de fluage et turbidité équivalentes et on améliore les valeurs du Pummel.

## Exemple 6

On opère de la même façon que dans l'exemple 5 sauf qu'après neutralisation jusqu'à pH 5, on ajoute un complément de soude à savoir 50 g pour atteindre un pH de 10 (pH = 10) lors d'un premier lavage avec de l'eau à 70 °C. Le produit est ensuite lavé encore une fois à 70 °C puis une fois avec de l'eau à température ambiante. On obtient les valeurs suivantes :

| Taux d'hydroxyle | 19,3 % |
| Taux d'éthyl 2-hexenal | 0,03 % |
| Fluage | 61 % |
| Chute de billes | 6,7 mètres |
| Pummel | 5 + 8 |
| Turbidité | 0,28 |

avec des verres mal lavés le Pummel est de 4 + 5.

Cet exemple montre qu'une phase de stabilisation supplémentaire par rapport à l'exemple 5 n'est pas nécessaire.

## Exemple 7

On opère de la même façon que dans l'exemple 5 sauf qu'on limite la durée du mûrissement du PVB, après neutralisation, à environ 5 minutes. On obtient les valeurs suivantes :

| Taux d'hydroxyle | 19,3 % |
| Taux d'éthyl 2-hexenal | 0,04 % |
| Fluage | 61 % |

**0 130 872**

| Chute de billes | 6,6 mètres |
| Pummel | 6 + 7 |
| Turbidité | 0,29 |

avec des verres mal lavés le Pummel est de 4 + 5.

Cet exemple montre que la durée du mûrissement peut être fortement réduite tout en conservant les bonnes propriétés pour la résine de PVB.

Ces essais confirment les avantages de l'utilisation du dioctylsulfosuccinate de sodium en tant qu'émulsifiant dans la synthèse du PVB.

Non seulement le choix du DOS permet de réduire le taux d'émulsifiant mais en outre il facilite le procédé de synthèse du PVB en autorisant une neutralisation partielle et il évite la formation d'odeurs désagréables.

**Revendications**

1. Procédé de fabrication de polyvinylbutyral par réaction d'alcool polyvinylique en solution aqueuse et d'aldéhydebutyrique, en présence d'un catalyseur acide et d'un émulsifiant, caractérisé en ce que l'émulsifiant est le dioctylsulfosuccinate de sodium.

2. Procédé selon la revendication 1, caractérisé en ce que la solution aqueuse comprend entre 8 et 15 % en poids d'alcool polyvinylique, en ce qu'on y incorpore un catalyseur acide et le dioctylsulfosuccinate de sodium en tant qu'émulsifiant, en ce que l'on introduit dans le mélange ainsi obtenu, maintenu entre 5 et 12 °C et sous agitation, de l'aldéhydebutyrique en quantité suffisante pour réagir avec 75 à 88 % de l'alcool polyvinylique du mélange, en ce que l'introduction de l'aldéhydebutyrique s'effectue progressivement pendant une durée telle que le polyvinylbutyral précipite entre 10 et 90 minutes après le début de cette introduction, en ce que le mélange résultant est maintenu sous agitation pendant une durée supérieure à 30 minutes à une température de 8 à 15 °C, en ce que la température du mélange est ensuite élevée jusqu'à une valeur maintenue entre 60 et 80 °C en un laps de temps compris entre une heure et demie et 4 heures, en ce que, lorsque ladite valeur de température est atteinte, on incorpore une base dans le mélange jusqu'à obtention d'un pH d'environ 5, en ce que la température est maintenue ensuite à ladite valeur pendant une durée égale ou supérieure à environ 5 minutes et en ce que le polyvinylbutyral précipité est ensuite séparé du mélange et lavé avec de l'eau.

3. Procédé selon une des revendications 1 ou 2, caractérisé en ce qu'on lave le précipité avec de l'eau à température ambiante.

4. Procédé selon une des revendications 1 à 3, caractérisé en ce que le catalyseur acide est de l'acide chlorhydrique.

5. Procédé selon une des revendications 1 à 4, caractérisé en ce que la quantité de dioctylsulfosuccinate de sodium représente de 0,10 à 0,30 % et généralement de l'ordre de 0,15 % du poids de l'alcool polyvinylique.

6. Procédé selon une des revendications 1 à 5, caractérisé en ce que la durée de la phase de mûrissement après neutralisation est comprise entre 5 et 10 minutes.

**Claims**

1. Method for making polyvinylbutyral by reaction of polyvinyl alcohol in aqueous solution and butyric aldehyde, in the presence of an acid catalyst and an emulsifier, characterised in that the emulsifier is sodium dioctylsulphosuccinate.

2. Method according to claim 1, characterised in that the aqueous solution comprises from 8 to 15 % by weight of polyvinyl alcohol, in that there is incorporated an acid catalyst and sodium dioctylsulphosuccinate as an emulsifier, in that there is added to the mixture so obtained, held at from 5 to 12 °C under agitation, butyric aldehyde in an amount sufficient to react with 75 % to 88 % of the polyvinyl alcohol in the mixture, in that introduction of the buryric aldehyde is carried out progressively for a duration such that the polyvinylbutyral precipitates from 10 to 90 minutes after start of this addition, in that the resulting mixture is held under agitation for a period greater than 30 minutes at from 8° to 15 °C, in that the temperature of the mixture is then raised to a value from 60° to 80 °C over a period of time from 1-1/2 to 4 hours, in that when this temperature value is obtained there is incorporated a base until a pH of about 5 is obtained, in that the temperature is then held at said value for a period of at least about 5 minutes and in that the precipitated polyvinyl butyral is then separated from the mixture and washed with water.

3. Method according to one of claims 1 and 2, characterised in that the precipitate is washed with water at ambient temperature.

4. Method according to one of claims 1 to 3, characterised in that the acid catalyst is hydrochloric acid.

5. Method according to one of claims 1 to 4, characterised in that the quantity of sodium dioctylsulphosuccinate is 0.10-0.30 %, generally about 0.15 %, of the weight of polyvinyl alcohol.

6

6. Method according to one of claims 1 to 5, characterised in that the duration of the ripening·phase after neutralisation is from 5 to 10 minutes.

**Patentansprüche**

1. Verfahren zur Herstellung von Polyvinylbutyral durch Umsetzen von Polyvinylalkohol in wässriger Lösung und Butyraldehyd in Gegenwart eines sauren Katalysators und eines Emulgators, dadurch gekennzeichnet, daß der Emulgator das Dioctylsulfosuccinat von Natrium ist.

2. Verfahren nach Anspruch 1, dadurch gekennzeichnet, daß die wässrige Lösung zwischen 8 und 15 Gew.-% Polyvinylalkohol enthält, daß in diese ein saurer Katalysator und das Dioctylsulfosuccinat von Natrium eingemischt wird bis es emulgiert, daß in die so erhaltene Mischung, die zwischen 5 und 12 °C und unter Rühren gehalten wird, Butyraldehyd in so ausreichender Menge eingeführt wird, daß es mit 75 bis 88 % des Polyvinylalkohols der Mischung reagiert, daß das Einführen des Butyraldehyds fortschreitend während einer solchen Zeitdauer durchgeführt wird, daß das Polyvinylbutyral zwischen 10 und 90 Minuten nach Beginn der Einführung ausfällt, daß die erhaltene Mischung unter Rühren während einer Zeit von mehr als 30 Minuten auf 8 bis 15 °C gehalten wird, daß die Temperatur der Mischung danach bis auf einen Wert zwischen 60 und 80 °C für einen Zeitraum zwischen eineinhalb und vier Stunden erhöht wird, daß bei Erreichen der genannten Temperatur eine Base in die Mischung eingearbeitet wird bis zum Erhalt eines pH-Wertes von ca. 5, daß die Temperatur daraufhin auf dem genannten Wert für eine Zeitdauer von gleich oder mehr als ca. 5 Minuten gehalten wird und daß das ausgefällte Polyvinylbutyral danach von der Mischung abgetrennt und mit Wasser gewaschen wird.

3. Verfahren nach einem der Ansprüche 1 oder 2, dadurch gekennzeichnet, daß der Niederschlag mit Wasser von Umgebungstemperatur gewaschen wird.

4. Verfahren nach einem der Ansprüche 1 bis 3, dadurch gekennzeichnet, daß der saure Katalysator Salzsäure ist.

5. Verfahren nach einem der Ansprüche 1 bis 4, dadurch gekennzeichnet, daß die Menge an Natrium-Dioctylsulfosuccinat 0,10 bis 0,30 % beträgt und im allgemeinen in der Größenordnung von 0,15 Gew.-% des Polyvinylalkohols liegt.

6. Verfahren nach einem der Ansprüche 1 bis 5, dadurch gekennzeichnet, daß die Zeitdauer der Sättigungsphase nach der Neutralisation zwischen 5 und 10 Minuten beträgt.